# EUROPEAN PATENT SPECIFICATION

(11) **EP 1 311 808 B1**
(45) Date of publication and mention of the grant of the patent: **16.02.2005**
(21) Application number: 01940253.6
(22) Date of filing: 16.06.2001
(51) Int. Cl.: G01G 19/02

(54) **PLATE FOR A WEIGHING BRIDGE**
PLATTE FÜR EINE WÄGEBRÜCKE
PLATEAU DE PESEE POUR PONT-BASCULE

(30) Priority: 20.06.2000 DK 200000211
(43) Date of publication of application: 21.05.2003
(73) Proprietor: Lund, Niels-Verner, 5210 Odense NV (DK); Eriksen, Knud Lund, 9000 Aalborg (DK)
(72) Inventor: Lund, Niels-Verner, 5210 Odense NV (DK); Eriksen, Knud Lund, 9000 Aalborg (DK)
(74) Representative: Tellefsen, Jens J.
(86) International application number: PCT/DK2001/000422
(87) International publication number: WO 2001/098739

(56) References cited:
- DE-A1- 3 611 095
- US-A- 4 411 159
- US-A- 4 572 308

## Description

The present invention relates to a plate for use in a weighing bridge used for weighing of large vehicles. The plate is the part of the weighing bridge onto which the vehicles drive and are parked during the weighing. Apart from the plate, the weighing bridge will also comprise a foundation, weighing cells and other electronic equipment which is necessary for the modern weighing of vehicles, but which together are known in the art.

Until now, plates for weighing bridges have been made as a steel construction using large steel profiles and in some cases with a partly-complete or complete cover of a massive steel reinforced concrete construction.

From DE 3611095 a weighing bridge construction is known, wherein a lost shuttering made from polymer concrete is used. After placing the shuttering it is filled with traditional concrete.

Traditional steel reinforced concrete constructions are characteristic in that because of their size they will weigh 70-80 tonnes which will necessitate casting in-situ. The size and especially the weight of traditional reinforced concrete weighing plates arise due to the fact that traditional concrete has a compressive strength of in the area 35-45 Mpa. In order for the plate to achieve strength characteristics corresponding to the load that the vehicles will impose on the plate, it is necessary for the plate to have certain dimensions. Furthermore, the size of the plate in order to accommodate the vehicles, usually trucks having trailers and the like, necessitates a size which makes the elements quite bulky. Furthermore, in order to give the traditional reinforced concrete plates sufficient resistance against aggressive environmental exposures such as salt, oil, fertilisers, gasoline etc., it is necessary to cover the traditional reinforcement with a minimum of 35-50 mm of concrete layer. The concrete layer is necessary in order to protect the passive environment around the steel reinforcement, and in this way avoid corrosion of the reinforcement. All these factors add up to a typical weighing plate weighing about 70-80 tonnes.

Furthermore, casting the plate in situ entails some disadvantages among others the risk of unevenness due to the use of moulds which are necessary in order to cast a plate, as well as the physical local conditions which differ from place to place in which the plate is to be cast.

It is therefore desirable to be able to prefabricate the plates under controlled conditions, for example under factory conditions, and after casting of the plates transport the uniform and controlled plates to the place where the weighing bridge is to be installed.

Plates for weighing bridges of this type will be exposed to harsh weather conditions as well as wear and tear from vehicles, which means that the steel construction will have to be taken apart for maintenance quite often. The exposure to weather and wear and tear from the vehicles often results deterioration of that the surface coating of the steel construction so that rust and other, for the steel construction harmful and destructive actions takes place. In order to counter this, it has been tried to encapsulate the steel construction in a concrete layer or all together produce the plate as a reinforced concrete construction. By doing this, part of the deterioration and maintenance problems has been solved, but not completely since some of the steel beams are still left without concrete cover in order to create contact zones and abutments for any other installations in the weighing bridge, such as weighing cells etc. It is therefore still quite often and in most instances on a yearly basis necessary to take apart the weighing bridge in order to clean and maintain the weighing plates as well as the weighing cells, which is disadvantageous from a cost point of view.

It is the purpose with the present invention to make available a plate for weighing bridges of the type mentioned above where the problems stated above are alleviated. Hereby a plate is provided which is manufactured in a fixed installation for example a factory and later after controlled and monitored hardening the plate can be transported to the weighing bridge installation. This also facilitates and reduces the periodic maintenance and renovation demands of weighing bridges.

This is achieved by the present invention with the weighing plate of the type mentioned above which is distinguished in that all exterior surfaces are made from a compact composite material.

A weighing plate according to the invention can because of the strength characteristics of the composite materials be dimensioned such that the plate will have a typical weight between 6 and 12 tonnes. Hereby is it possible to transport an entire weighing plate on a normal truck or lorry whereby it is possible to manufacture the plates as prefabricated elements. Furthermore, a plate for a weighing bridge is produced which does not necessitate frequent works in order to renovate the weighing bridge since all steel parts are encapsulated in the composite material. In this manner a plate for a weighing bridge is attained which has a great durability and minimum of maintenance and a low weight.

By being able to prefabricate the plate for the weighing bridge and transporting it by normal road means that the weighing bridge can be constructed with very well defined dimensions and characteristics which have hereto only been known from industrially produced items. Furthermore, the complete construction time of a weighing bridge utilising a plate according to the present invention can be completed much faster than mould plates of the traditional construction where the construction of a mould, the casting and the hardening of a traditionally made weighing plate consumes much time.

By being able to construct the plate for a weighing bridge with a much reduced height new possibilities for the design and construction of weighing bridges arises that with plates of the traditional construction. By having this advantage further development of weighing bridges can be undertaken in order to construct faster, smaller and cheaper weighing bridges.

These advantages are achieved by the plate for a weighing bridge according to the invention, especially since all reinforcement members of steel are encapsulated in the composite material, which in itself exhibits an extremely high density, strength, compactness and durability.

The high compactness of the composite material secures the composite material's resistance against influences from the surroundings, especially from chemical materials, fertilisers and the like, which under normal circumstances would attack steel and/or normal concrete. The very compact and dense composite material is also very resistant against climatic influences, especially carbonising of the concrete, which otherwise could destroy the passive environment around the steel in normal concrete. The same density and compactness also secures the composite material from influences from chlorides which are present in salt, which is usually used for thawing purposes in the winter in order to thaw snow and ice which can otherwise be present on or around the weighing bridge. Also due to the compactness of the composite material, frost, thaw, frost cycles does not have the same influence on the material and hereby is avoided that damaged due to frost cycles is avoided.

By not having exterior steel surfaces and also utilising the extremely good durability of the composite material against influences from the environment, this together reduces and in some cases alleviates altogether the need for frequent maintenance works in order to renovate or restore the plate of the weighing bridge.

By further choosing a composite material which has a good resistance to wear, the durability of the plate against wear by vehicles is greatly improved, especially on the top surface of the plate.

As the constructional height of the plate for the weighing bridge is particularly low with the construction according to the present invention and the possibility of making recesses for loading cells in the plate is an extra advantage obtained in that it is possible to make the foundation section of the weighing bridge very shallow and almost at the same level as the surface of the road whereby it is only necessary to arrange relatively low access ramps. This facilitates easier and thereby cheaper cleaning and maintenance of the installation as it is not a deep excavation but a shallow construction which makes access easier. Furthermore there is an economic advantage when constructing the weighing bridge as no major constructional works are required.

The composite material comprises a binder part and an aggregate part as well as sufficient liquid in order to make the composite material castable. The composite part of the weighing plate can furthermore comprise reinforcements. The reinforcement can be in the shape of a netting and/or in the shape of fibres. When using fibres, especially steel fibres are preferred, as the steel fibres will give a very tough and ductile material. Other types of fibres can be used as well, for example polypropylene fibres, other plastic fibres, carbon, wood, ceramic or glass fibres. The aggregate part of the composite material should be chosen between very durable and hard materials, for example pulverised granite or pulverised bauxite or other similar materials. The liquid part is mainly water, but further additives in order to achieve a more or less flowable composite material according to circumstances can be chosen.

By choosing an aggregate having a good durability and resistance against abrasion as well as prefabricating the elements under controlled conditions, the surface of the weighing plate can be made with a skid resistant surface.

When producing a plate according to the present invention a mould representing the dimensions of the finished product is made. The inside of the mould is shaped in a way which will allow the finished plate to be extracted easily from the mould. A steel structure representing the load bearing part of the weighing platform is thereafter placed in the mould. By arranging distance keepers, for example made of the composite material in strategic positions, it is assured that the composite cover layer will be or can be continuous and of the same thickness all over the plate. After arranging the steel members and the distance keepers in the mould, members representing recesses in the finished plate are arranged in the mould as well. Hereafter the composite material is poured into the mould. The composite material is made so that it flows easily under and around the steel members thus assuring an even and continuous cover. The mould containing the steel members as well as the composite material can optionally be vibrated in order to facilitate the flowing of the composite material around the steel members already placed in the mould.

By the production steps outlined above it is achieved that all conditions concerning the production of a plate for a weighing bridge are controlled. If the mould is placed inside a building, the temperature can be maintained at a constant level as can the humidity. By using factory equipment the casting of the composite material as well as welding of the steel part of the plate can easily be controlled and kept within the tolerances accepted for prefabrication of members of this type. Furthermore, after removing the member from the mould, the storage, which is very important for members comprising composite materials of this type, is also easily controlled. All these factors together achieve a better and more constant quality of plates for weighing bridges which hitherto has been achieved by casting in place.

It is clear that the size of the plate is decided by the size of the mould. If larger plates are needed, a larger mould with a stronger and bigger steel structure must be manufactured. The size of weighing bridges, however, is more or less standardised to the size of trucks/lorries which are allowed to ride on the roads in the country in question. It will therefore be possible to more or less produce a standardised weighing bridge having a standardised size weighing plate. By having a standardised sized weighing plate it will be possible to premanufacture and store a number of plates so that if or when a weighing bridge needs to be replaced, a plate will immediately and without any delay be available from the manufacturer. In some embodiments of the invention the plates can advantageously be made in modules, where a number of modules together constitutes the weighing plate. By producing modular plates a number of additional advantages are achieved, i.e. it is easier to transport and mount smaller sized plates, when having to replace the weighing plate perhaps only one module needs to be replaced, more modules can be assembled to construct weighing stations of different sizes, etc.

### Description of the drawing

One detailed embodiment of the invention will now be explained with reference to the attached drawing wherein
- fig. 1: shows a perspective view of the plate according to the invention,
- fig. 2: shows a longitudinal cross section of the plate and
- fig 3: shows a cross section through the plate.

In the drawing is illustrated one embodiment of a plate for a weighing bridge with a load carrying main reinforcement encapsulated in a composite material. The main reinforcement consists of large square profiles of steel as well as normal rebars in steel. A secondary reinforcement is arranged as a steel mesh. The composite material is a steel fibre reinforced Weartec Binder with aggregate which exhibits extremely good abrasion resistance.

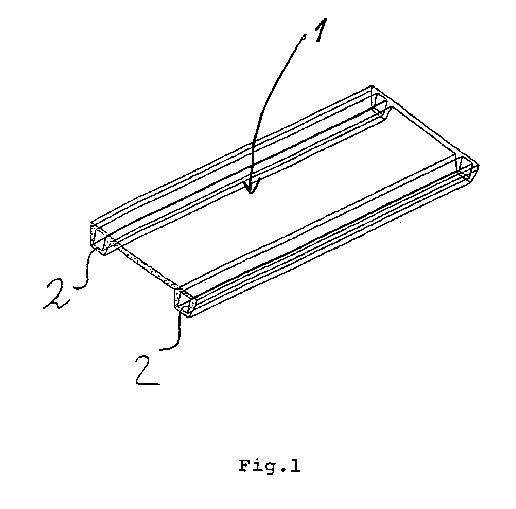

Figure 1 shows a plate (1) in perspective view without any end finishing, abutments or recesses for weighing cells or other installations. These recesses can be arbitrarily placed on the plate and will be decided when designing the plate and arranged in the plate during setting up in the mould during the prefabrication of the plate member. The length of the plate will typically be 6-10 meters, preferably 8-10 meters. The width of the plate will typically be around 3 meters, but will be variable and can be decided according to the width of the vehicles.

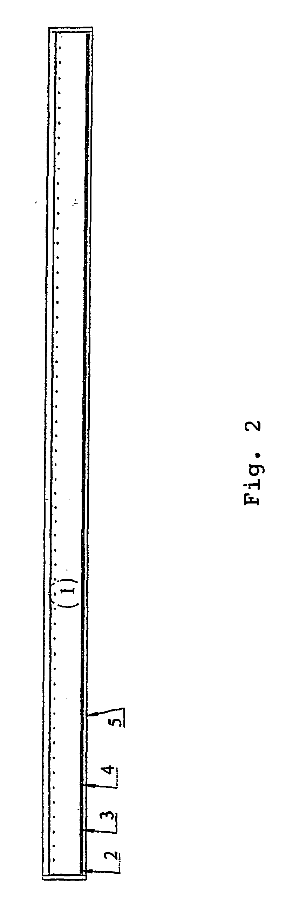

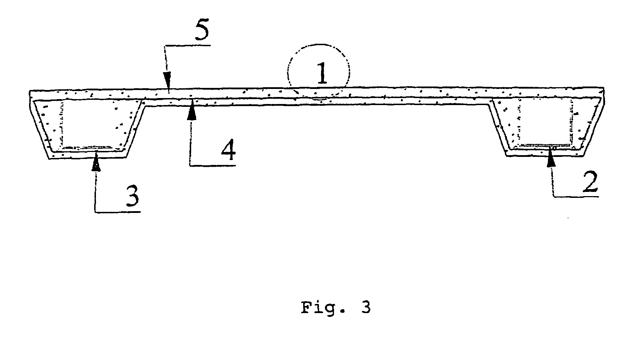

From fig. 2 and 3 is the construction of the plate illustrated. Internally, hollow steel members with a rectangular or quadratic cross section 2, preferably in steel is used in the plate. These steel members constitute the main reinforcement together with other main reinforcement, which is in the shape of rebars 3 of the tentor or cam steel type.

A secondary reinforcement in the shape of a steel mesh and a dense composite material 5 which is composed in order to obtain a good abrasion resistance by using abrasion resistant aggregate as well as designed to achieved a high strain resistance by the use of steel fibres. In this manner, intimate contact between the large steel members 2 and the other main reinforcements and the composite material which all together is being utilised in an optimum constructive way is achieved.

In one specific embodiment of the invention the composite material 5 can be composed of 1/3 part by weight of ground or pulverised bauxite with a grain size in the interval of 1-3 mm and 1/3 part by weight of ground or pulverised bauxite with a grain size in the interval from 0-1 mm and 1/3 part by weight of Cemsystems Weartec Binder 6310.

In order to achieve an easily flowable casting mass when subjected to vibration, the water content of the castable composite mass is around 20 % by weight of the amount of binder. Steel fibres have been added in an amount of about 3% by weight of the amount of binder and the chosen steel fibre is characterized by a high tension resistance. Preferably the fibres are made from stainless steel.

The casting of the composite mass is done by casting the material in a steel mould wherein the reinforcement as mentioned above has already been arranged which is continually being vibrated during the casting of the material. After placing the composite material in the mould and after the material has lost some of its flowability, the free surfaces have been treated with a concrete surface finisher or in another way been treated in order to achieved the finished surface structure of the plate.

After having treated the finished surfaces, a curing compound has been applied to the free surfaces whereafter the plate element, e.g. the steel reinforcement encapsulated in the composite material finished off with a curing compound still in the mould has been left for curing. Depending on the temperature at which the production of the plates takes place, the plate element is taken from the mould when the plate has achieved sufficient strength in order not to be deformed or damaged due to the handling of the plate. Hereafter the plate is left for curing until it has obtained a maturity equal to 28 days at 20 °C before being mounted in the weighing bridge.

In the embodiment mentioned above hollow steel profiles of a square or rectangular profile has been used. It is within the scope of the invention to use steel profiles having other profiles, for examples T-profiles, triangular or in any other way using steel profiles which are suitable for this purpose. In the embodiment stated above the mesh used as secondary reinforcement was a steel mesh, but it is also within the invention to use mesh of different materials, for example of steel wires, stainless steel wires, carbon fibres, glass fibres or any other suitable mesh which is strong enough to contribute to the continuity of the composite mass. Likewise does the embodiment describe use of steel fibres, but fibres made from other materials such as ceramics, steel, wood, glass, carbon, plastics or other suitable material can also be used.

In the example the binder used was Weartec Binder 6310 delivered by Cemsystems, but any binder suitable for achieving a composite matrix having a density in its surface area which protects the reinforcement can be used. For example composite materials consisting of abrasion resistant aggregate particles suitably graded as stated within the description, and comprising a binder consisting of cement, ultra fine particles such as micro silica, fly ash and/or similar particles mixed with water with suitable additives can also be used to create the composite material.

During the production of the weighing plate in a mould either the top surface or the bottom surface of the plate will be a free surface due to casting techniques. It is within the scope of this invention to have either the top or the bottom surface as the free surface depending on the shape of the mould. By having the top surface as the free surface, a man made skid resistance pattern can be applied to the surface which will be the surface on to which the vehicles will drive when the plate is in use. However, if a more regular and uniform structure is desired it is advantageous that the top surface of the finished plate is the mould surface, whereby the bottom surface of the finished plate becomes the top surface, which will be manually finished with a concrete finisher.

A composite material as described above will attain a compressive strength which is typically more that 80 Mpa, preferably more than 100 Mpa, but most preferably above 120 Mpa. When constructing a plate element according to the invention, comprising the composite steel fibre reinforced material covering all surfaces of a main steel reinforcement, consisting of hollow rectangular steel members as described it is only necessary to create support points which typically will be in the shape of weighing cells with a ratio between them in relation to the thickness of the plate of 0,06 or more, preferably 0,05 and most preferably of 0,04. In one example this means that if the plate is 0,2 meters thick, the distance between two supports, for example in the shape of weighing cells, will be approximately five meters in the most preferred embodiment of the invention.

## Claims

1. Plate (1) for a weighing bridge of the type used in installations for weighing trucks, lorries and similar large vehicles, wherein all exterior surfaces are made from a com pact composite material, **characterized in that** the plate is built from a cement based composite material (5), optionally fibre reinforced, which together with a simple secondary reinforcement encapsulates a main reinforcement comprising normal rein forcement bars (3) and hollow profiles (2).

2. Plate according to any of the preceding claims **characterized in that** the composite material (5) comprises a fibre reinforced cement material with a compressive strength, typically of more than 80 Mpa, preferably over 100 Mpa and most preferably over 120 Mpa.

3. Plate according to any of the preceding claims **characterized in that** the height of the plate (1) in relation to the distance between two supports, for example in the shape of weighing cells, is at most 0,06, preferably most 0,05 and most preferably 0,04.

4. Plate according to any of the preceding claims **characterized in that** the fibre rein forced composite material (5) completely encapsulates a simple secondary reinforcement as well as a main reinforcement in the shape of reinforcement bars (3) and possibly in the shape of hollow profiles (2), for example square shaped profiles.

5. Plate according to any of the preceding claims **characterized in that** the fibre reinforced composite material (5) comprises abrasion resistant aggregate particles and a binder consisting of cement, ultra fine particles, for example microsilica, fly ash and water as well as suitable additives.

6. Plate according to any of the preceding claims **characterized in that** the plate (1) is produced in a mould and that the side of the plate not facing a mould surface is finished using a concrete surface finisher.

7. Plate according to any of the preceding claims **characterized in that** the composite material (5) comprises cement, ultra fine pulverised material, additives and water.

8. Plate according to any of the preceding claims **characterized in that** the composite material (5) contains fibres made from steel, ceramics, wood, glass, plastics or any other suitable fibre.

## Patentansprüche

1. Platte (1) für eine Wiegebrücke des Typs, der in Anlagen zum Wiegen von Lastkraftwagen, Güterwagen oder ähnlich großen Fahrzeugen verwendet wird, wobei alle äußeren Oberflächen aus einem kompakten Verbundwerkstoff hergestellt sind, **dadurch gekennzeichnet, dass** die Platte aus einem optional faserverstärkten Verbundwerkstoff (5) auf Zementbasis aufgebaut ist, der zusammen mit einer einfachen sekundären Verstärkung eine Hauptverstärkung, die normale Verstärkungsstäbe (3) und Hohlprofile (2) umfasst, einkapselt.

2. Platte nach einem der vorhergehenden Ansprüche, **dadurch gekennzeichnet, dass** der Verbundwerkstoff (5) faserverstärkten Zementwerkstoff mit einer Kompressionsfestigkeit, die typischerweise höher als 80 MPa, vorzugsweise höher als 100 MPa und am stärksten bevorzugt höher als 120 MPa ist, umfasst.

3. Platte nach einem der vorhergehenden Ansprüche, **dadurch gekennzeichnet, dass** die Höhe der Platte (1) im Verhältnis zu dem Abstand zwischen zwei Trägern, beispielsweise in Form von Wiegezellen, höchstens 0,06, vorzugsweise höchstens 0,05 und am stärksten bevorzugt 0,04 beträgt.

4. Platte nach einem der vorhergehenden Ansprüche, **dadurch gekennzeichnet, dass** der faserverstärkte Verbundwerkstoff (5) eine einfache sekundäre Verstärkung sowie eine Hauptverstärkung in Form von Verstärkungsstäben (3) und möglicherweise in Form von Hohlprofilen (2), beispielsweise quadratisch geformten Profilen, vollständig einkapselt.

5. Platte nach einem der vorhergehenden Ansprüche, **dadurch gekennzeichnet, dass** der faserverstärkte Verbundwerkstoff (5) abriebbeständige Aggregatpartikel und ein Bindemittel, das aus Zement, ultrafeinen Partikeln, beispielsweise Mikrosilica, Flugasche sowie geeigneten Additiven besteht, umfasst.

6. Platte nach einem der vorhergehenden Ansprüche, **dadurch gekennzeichnet, dass** die Platte (1) in einer Form hergestellt wird und dass die Seite der Platte, die der Formoberfläche nicht zugewandt ist, unter Verwendung eines Betonoberflächen-Endbearbeitungsmittels endbearbeitet wird.

7. Platte nach einem der vorhergehenden Ansprüche, **dadurch gekennzeichnet, dass** der Verbundwerkstoff (5) Zement, ultrafeines pulverisiertes Material, Additive und Wasser umfasst.

8. Platte nach einem der vorhergehenden Ansprüche, **dadurch gekennzeichnet, dass** der Verbundwerkstoff (5) Fasern, die aus Stahl, Keramik, Holz, Glas oder Kunststoff hergestellt sind, oder irgendwelche anderen geeigneten Fasern enthält.

## Revendications

1. Plateau (1) pour un pont-bascule du type utilisé dans des installations pour peser des camions et gros véhicules similaires, où toutes les surfaces extérieures sont réalisées à partir d'un matériau composite compact,
**caractérisé en ce que** le plateau est construit à partir d'un matériau composite à base de ciment (5), éventuellement armé de fibres, qui en même temps qu'une simple armature secondaire enrobe une armature principale comprenant des barres d'armature (3) et des profilés creux (2) normaux.

2. Plateau selon une quelconque des revendications précédentes,
**caractérisé en ce que** le matériau composite (5) comprend un matériau en ciment armé de fibres ayant une résistance en compression typiquement supérieure à 80 Mpa, de préférence au-dessus de 100 Mpa et le plus préférablement au-dessus de 120 Mpa.

3. Plateau selon une quelconque des revendications précédentes,
**caractérisé en ce que** la hauteur du plateau (1) par rapport à la distance entre deux supports, par exemple sous la forme de cellules de pesée, est au plus de 0,06, de préférence 0,05 et le plus préférablement 0,04.

4. Plateau selon une quelconque des revendications précédentes,
**caractérisé en ce que** le matériau composite armé de fibres (5) enrobe complètement une simple armature secondaire ainsi qu'une armature principale sous la forme de barres d'armature (3) et éventuellement sous la forme de profilés creux (2), par exemple des profilés de forme carrée.

5. Plateau selon une quelconque des revendications précédentes,
**caractérisé en ce que** le matériau composite armé de fibres (5) comprend des particules de granulat résistant à l'abrasion et un liant composé de ciment, de particules ultra-fines, par exemple de microsilice, de cendre volante et d'eau ainsi que des additifs appropriés.

6. Plateau selon une quelconque des revendications précédentes,
**caractérisé en ce que** le plateau (1) est produit dans un moule et **en ce que** le côté du plateau ne faisant pas face à une surface du moule est terminé en utilisant un dispositif de finition de surface en béton.

7. Plateau selon une quelconque des revendications précédentes,
**caractérisé en ce que** le matériau composite (5) comprend un ciment, un matériau pulvérisé ultra-fin, des additifs et de l'eau.

8. Plateau selon une quelconque des revendications précédentes,
**caractérisé en ce que** le matériau composite (5) contient des fibres réalisées en acier, céramique, bois, verre, matière plastique ou une quelconque autre fibre appropriée.
